# EUROPEAN PATENT SPECIFICATION

(11) **EP 2 815 346 B1**
(45) Date of publication and mention of the grant of the patent: **26.10.2022**
(21) Application number: 13748986.0
(22) Date of filing: 07.02.2013
(51) Int. Cl.: G06F 21/62, G06F 9/50, H04L 12/14, H04L 41/5041

(54) **COORDINATION OF PROCESSES IN CLOUD COMPUTING ENVIRONMENTS**
KOORDINATION VON PROZESSEN IN CLOUD-COMPUTING-UMGEBUNGEN
COORDINATION DE PROCESSUS DANS DES ENVIRONNEMENTS D'INFORMATIQUE EN NUAGE

(30) Priority: 13.02.2012 US 201261598305 P
(43) Date of publication of application: 24.12.2014
(73) Proprietor: Oracle International Corporation, Redwood Shores, California 94065 (US)
(72) Inventor: PALAN, Kiran, Santa Clara, CA 95051 (US); VAN BILJON, Willem, Robert, Claremont, 7708 Cape Town (ZA); SIDDHA, Vividh, Sunnyvale, CA 94087 (US); JUDKOWITZ, Jay, San Jose, CA 95120 (US)
(74) Representative: Gill Jennings & Every LLP
(86) International application number: PCT/US2013/025211
(87) International publication number: WO 2013/122815

(56) References cited:
- WO-A2-2011/159842
- US-A1- 2009 240 728
- US-A1- 2011 055 712
- US-A1- 2012 017 112
- Fang Liu ET AL: "NIST Cloud Computing Reference Architecture", , 8 September 2011 (2011-09-08), XP055211786, Gaithersburg Retrieved from the Internet: URL:http://www.nist.gov/customcf/get_pdf.c fm?pub_id=909505 [retrieved on 2015-09-08]
- M-T Schmidt ET AL: "The Enterprise Service Bus: Making service-oriented architecture real", IBM Systems Journal, 1 October 2005 (2005-10-01), pages 781-797, XP055211783, Armonk DOI: 10.1147/sj.444.0781 Retrieved from the Internet: URL:http://search.proquest.com/docview/222 420342

## Description

### FIELD

The present invention relates to cloud computing. More particularly, the present invention relates to the coordination of processes in cloud computing.

### BACKGROUND

Cloud computing is a way for users to store data and operate computational processes on infrastructure connected by a network. Thus, instead of having to purchase physical infrastructure, users send processes and data out to be run and stored on infrastructure owned by other entities. The user only pays for the amount of data storage or processing capability that he or she desires. This allows the user to tap computing resources that would be impossible without owning actual, physical and vast computing resources. Cloud computing opens up great possibilities because of the many resources available. But, by its very nature, the cloud computing has so many tools and resources that it is difficult to organize efficiently.

Fang Liu et al "NIST Cloud Computing Reference Architecture (2011) and WO 2011/159842 A2 disclose approaches to managing computer cloud resources.

### SUMMARY

In accordance with the invention there is provided a method of managing computer cloud resources and a system of managing computer cloud resources as set forth in the claims.

### DESCRIPTION OF THE DRAWINGS

For a better understanding of the embodiments described in this application, reference should be made to the description below, in conjunction with the following drawings in which like reference numerals refer to corresponding parts throughout the figures.
Figure 1 is an overview of the steps required to create an orchestration according to some embodiments.
Figures 2(a) to (c) illustrate the steps of Figure 1 schematically with reference to various objects in cloud computing according to some embodiments.
Figure 3 is an expansion of Figure 2 showing how an orchestration can be joined to another orchestration according to some embodiments.
Figure 4 is still a further expansion of Figures 2 and 3, showing multiple layers of orchestrations driving other orchestrations according to some embodiments.
Figure 5 is a schematic overview of a system on which these orchestrations can run according to some embodiments.
Figure 6 is a schematic illustrating an alternate structure of a cloud computing system, suitable for use with the orchestration techniques described herein according to some embodiments.

### DETAILED DESCRIPTION

Computer networks of many kinds exist today. Closed and proprietary networks, open and public networks, and hybrid networks as well. These networks tie together computer servers and databases in ways that allow computer programs to run efficiently. Some embodiments of such networks are known as "cloud computing." Over such a network, such as the internet, computer resources such as infrastructure, platforms and applications can all be used by client users. The physical resources of such cloud networks may be scattered around various physical locations, but by being networked together, can become a larger resource. Various systems and methods can be used to manage the resources that can be hosted and run on such a cloud network.

The technology described in this document seeks to address this by allowing users to coordinate their cloud computing in order to become efficient, coherent, redundant, interdependent, and secure. This 'orchestration' provides for the automated management of user-defined system components for high availability, monitoring, and persistence allowing users to troubleshoot systems, manage processes and to create and coordinate complex processes in a computing cloud, or over numerous clouds.

Orchestration is a specification by which user can specify different objects or references to other orchestrations or objects, establish relationships between them and apply different kinds of policies on them. These objects include but are not limited to all first class features provided by the cloud and Cloud Services Extensions added to the cloud. Different kind of relationships can be specified. "dependency" is one example of a relationship. Different kinds of policies can be applied. "high-availability(HA) and autoscaling" are few examples of such policies. User can co-ordinate several processes on the same, multiple or public clouds. These processes may include any functionality/objects provided by the cloud. Example: security policies, storage co-ordination, networking, actual CRs (computational resources which includes but is not limited to a virtual machine, OS container or an actual physical machine), new cloud services/extensions enabled on the cloud, etc.

User can create/add his own orchestration which may contain the potpourri of his desired objects or contain references to other orchestrations. The user can establish relationships between different kinds of objects/references and apply policies example: HA. After the User has created his orchestration, he can start the orchestration. When the orchestration is started, the cloud objects are orchestrated according to the specifications in the orchestration. The Orchestration is the coordination of the objects. A single orchestration can even create and manage other orchestrations. For example, a Master Orchestration can drive three children orchestrations, each of those three of their own children, and so on, creating a compounding or mushrooming effect.

Just as objects can have dependencies among and between them, entire orchestrations can do the same. In this way, not only separate objects are coordinated, but orchestrations, more complex series of objects run in concert are then coordinated. A Cloud administrator can set up users and groups this way as well as security, or other processes. Different kinds of relationships can be defined among and between the objects and orchestrations. It is important to bear in mind that usually, a user admin/user/developer etc can specify only cloud objects on which he/she has permissions. All existing security mechanisms including permissions, access, keys on each individual cloud objects are honored. For example: a cloud admin can orchestrate users/groups/networks etc while another user can orchestrate CRs(virtual machines, OS containers etc .) and they can even co-ordinate Cloud Services.

Different kind of policies can be applied on cloud objects. Policies include but are not limited to High Availability (apply different policies if they go away e.g. - recreate them on same/another cloud etc..), Monitoring (monitor the state of the objects), Autoscaling (scale the objects up or down based on certain criteria). Cloud can provided its own implementation of these policies or a user /cloud-admin can create custom policies.

Thus, orchestration ties together cloud computing components into a single, manageable collection for the user. For example, with orchestration a user can associate networks, network security, and storage with the instantiation of a Computational Resource, which includes, but is not limited to a Virtual Machine, OS containers or an actual physical machine. This instantiation can be restarted automatically if it terminates for some reason, it can be monitored, or it can be disabled. In addition, a user can specify dependencies to affect the sequence of how components are orchestrated.

### Overview

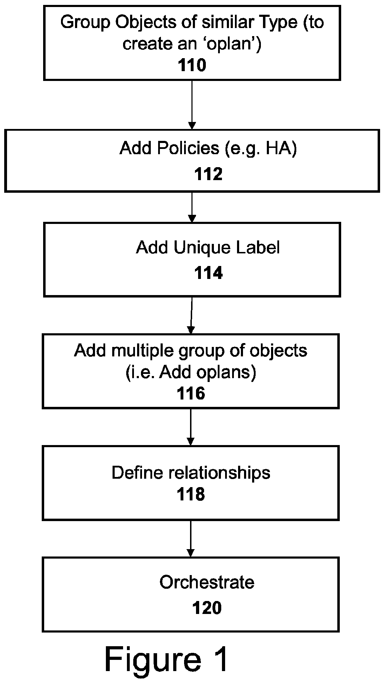

In overview, the steps for creating an orchestration are illustrated in Figure 1. Specifically, a user group 110 objects of similar type to create an orchestration plan or 'oplan.' Thereafter, 112, the user adds one or more policies, for example 'high availability" (HA) to the specific oplan. Then, 114, the user adds a unique label to the oplan. Once that is done, the user adds additional groupings of similarly created bur differently functioning, oplans, 116. At this stage, 118, the user defines the relationships between the added oplans and thereafter, 120, has created an 'orchestration.' Thus, an orchestration is a group of objects. As will be shown below, it can also have other orchestrations as objects.

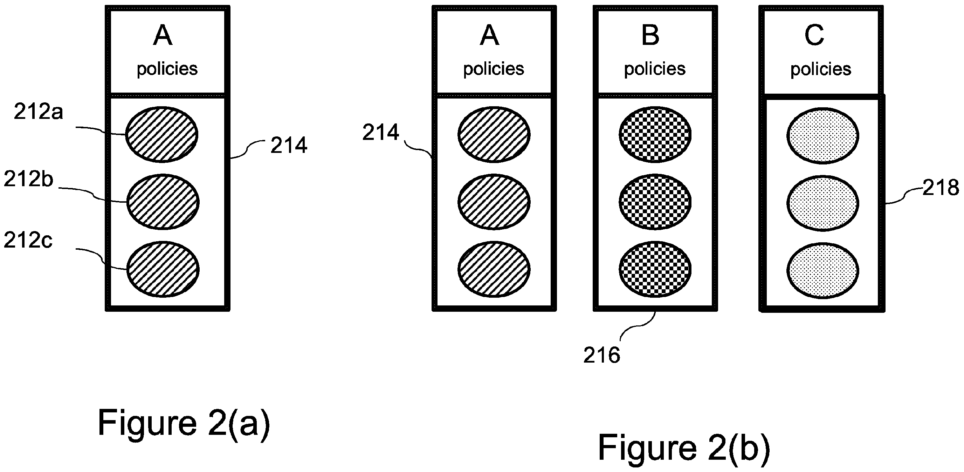

Figures 2(a) to (c) illustrate these processes with reference to cloud computing objects shown schematically. In Figure 2(a), a user (not shown) has grouped objects 212a, 212b, and 212c of similar type into an orchestration plan 214. The user has added one or more policies, shown schematically as "policies," and added a unique label A in this case to the oplan.

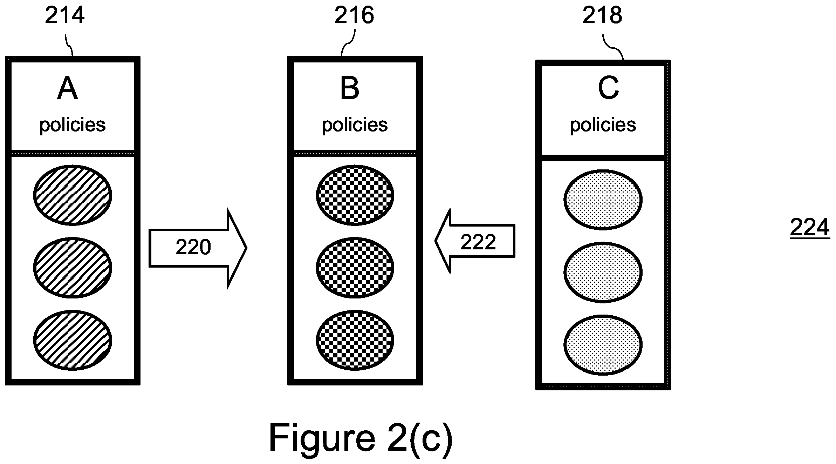

In Figure 2(b), the user has added (in this illustration, two) other of similarly created but differently functioning, oplans 216 and 218, each with their own name (B, C respectively) and 'policies.' Then, as shown in Figure 2(c), the user has defined relationships 220 and 222, which may or may not be the same relationships, respectively between oplans 214 and 216 and 216 and 218. This results in an overall orchestration 224.

The orchestration model therefore represents a grouping of objects, namely: oplans: is a fully listed sub collection of oplans described below; status: overall status for this orchestration; and relationships: list of relationships. This defines the relationships between two or more oplans. 'o1< o2 or o2 > o1' would implies an order in which o1 should be before o2. If a dependency fails then subsequent oplans will not be started.

Also, for the above, it will be apparent that the oplan represents an orchestration plan for a specific object and that it only exists as part of an orchestration. It may include a number of attributes, including: obj_type: refers to the type of the object. It is nothing but the base path for other models in the system. Examples: launchplan, vservice/vdhcpservice etc.; objects: List of object dictionaries or names of obj_type. See examples below; status: status for this oplan; and ha_policy: if a user wants an object to persist, for example with instances, launchplans, etc., the user can apply an ha policy here. It is possible to support 3 policies - disabled, monitor and active, in which *disabled:* means that the object will not monitored at all. (This is the default policy); *monitor:* monitor the object and just report error when something goes wrong; and *active:* monitor the object and if it is not found or in error state. keep trying to create it again or bring it back to a sane state.

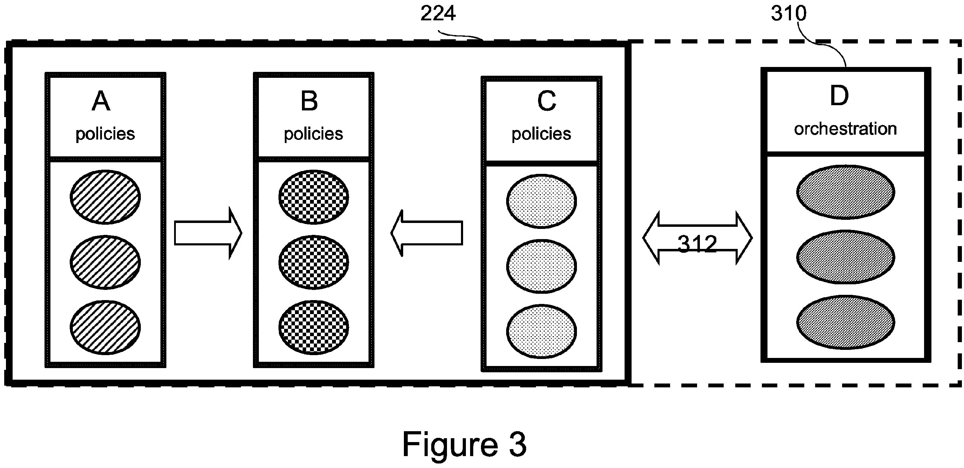

As is illustrated in Figure 3, this concept can be expanded even further so that a single orchestration, for example orchestration 224 created with reference to Figure 2; can have another orchestration 310 as an object. As before this added orchestration 310 will itself have a unique label "D" and policies at the orchestration level and will also have a defined relationship 312 with the orchestration 224 created with reference to Figure 2. Thus a single orchestration can drive other orchestrations.

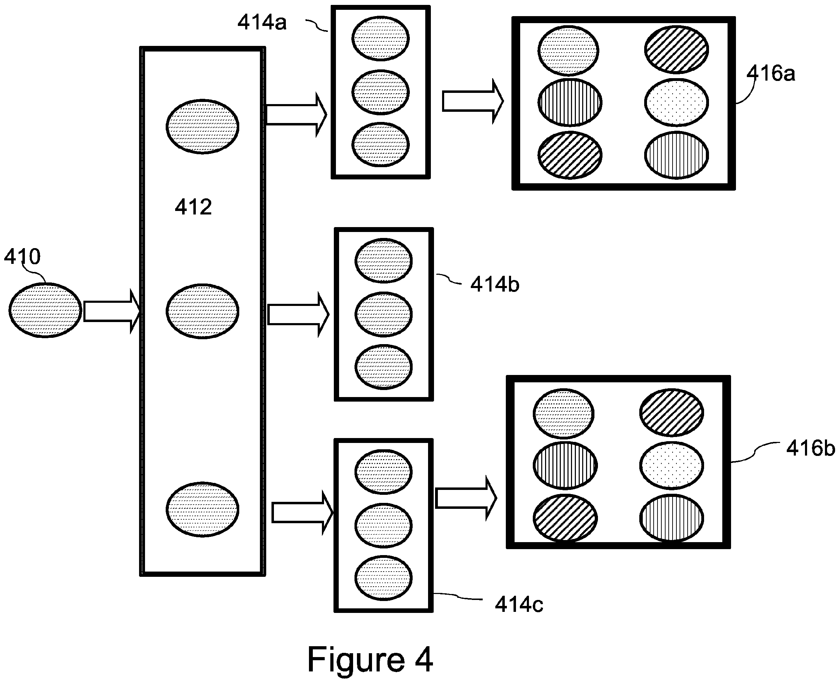

Moreover, as illustrated in Figure 4, a single master object 410 can drive an orchestration 412, which can itself drive other orchestrations 414a, 414b and 414c. These orchestrations 414a, 414b and 414c can themselves drive even other orchestrations 416a and 416b, etc, thus creating an ever expanding "mushroom effect."

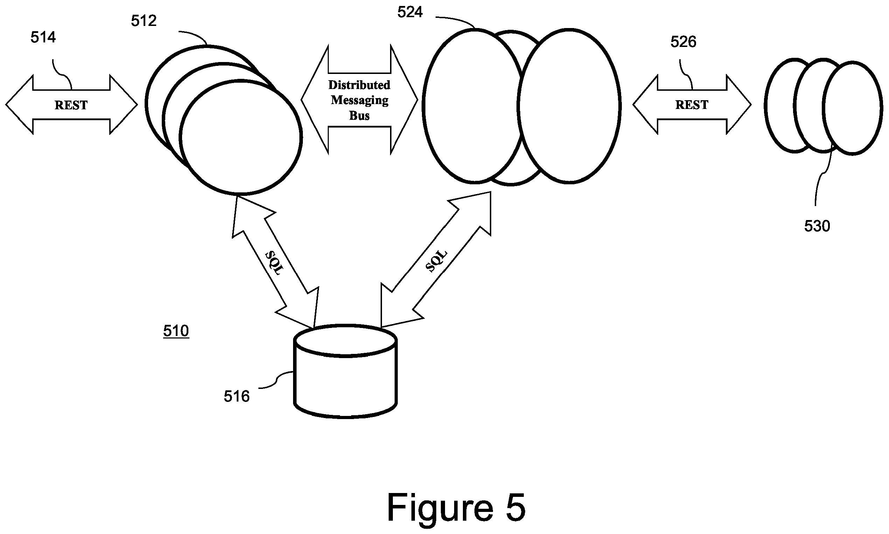

A system for implementing the technology described in this document is shown in Figure 5. Specifically, the system 510 has two main components, i.e. site controller, orchestration site 512, which functions to expose the Web API (e.g., REST, SOAP, etc.) interface 514. It also adds/deletes an orchestration to/from the storage such as a database (DB) 516 and assigns it to one of the orchestration managers 524. The storage could also be cloud storage. In addition, a manager, orchestration manager 524 manages the actual orchestration by Restfully or otherwise managing 526 objects providing 'high availability' (HA), monitoring and other features. This figure also shows a plurality of controllers, site controllers 530. This publish subscribe mechanism can exist on the same cloud or across clouds.

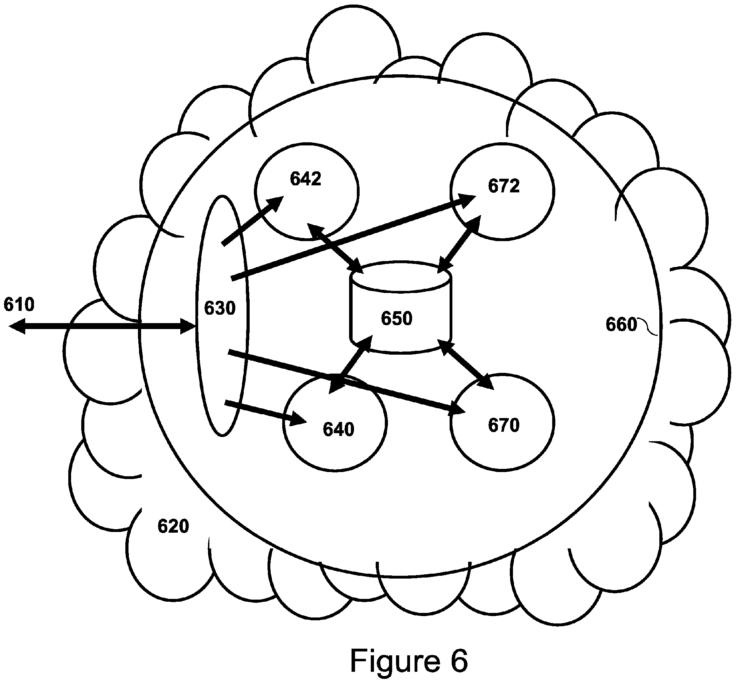

Figure 6 is a schematic illustrating an alternate structure of a cloud computing system, suitable for use with the orchestration techniques described herein. In this figure, the APIs, 610 are used to communicate to the cloud 620 through a distributing load balancer 630. The load balancer, 630 distributes services to different Orchestration Managers, 640, 642, which are each in communication with a distributed database system, distributed data store, 650. A Messaging Service 660 coordinates the communication among the distributed database system, Orchestration Managers 670, 672 and the Load Balancer 630 on the cloud 620 and among other possible clouds (not shown).

As will be described more fully below, this system allows a user to group together a plurality of objects and to orchestrate a number of common functions, such as add/get/delete/update; monitor status; provide High Availability; specify relationships between different objects and auto-scale certain objects, for example, instances and cloud services.

The use of this system and the methods described above will now be described with reference to specific, non-limiting examples.

### Working with orchestration

As described, orchestration is the automated management of user-defined system components for high availability, monitoring, and persistence. Orchestrations can be available via a Web API/CLI/UI but they can be extended to other interfaces. For example, in a non limiting example, one can work with orchestrations either with web console or the command line: The web console is sufficient for basic, simple orchestrations. More complex orchestrations can be stored in a JSON file and then added, started, stopped or deleted with the nimbula-api command.

These specific examples should not be seen as limiting. Thus, orchestrations can be specified in any document /object specification language, for example: JSON/YAML/XML, etc.

To illustrate, the following topics are explored below: a simple orchestration; a generalized process for orchestrating; the status of an orchestration; the number of components, specifying dependencies, and nesting orchestrations; an example of working with orchestration on the command line; and orchestration with Amazon EC2. While this example considers EC2, it should be noted that a single orchestration can span private and public clouds. Amazon EC2 is just one of the examples. After that additional features are also explored.

### A simple orchestration

One example includes starting a virtual machine, where the name of the machine image list and the desired shape are known. From the command line, for example, an orchestration may be started as shown in the following example.
nimbula-api orchestrate simple /acme/imagelists/lucdi64 medium

Complete details about nimbula-api orchestrate simple, including how to specify a high availability policy and number of instances and other orchestration-related commands, are in the *The system Command-line Interface Reference,* the details of which are incorporated herein by reference.

### Generalized process for orchestrating

A basic illustrative process of working with orchestrations is as follows:
i. Create the orchestration, containing the following at a minimum. For use on the command line, an orchestration is stored in a file in JSON format; see Orchestration with Amazon EC2. [Importantly, this JSON example and the later CLI example are is just two of the multiple ways in which this can be accomplished.]
   - Its name.
   - Its "high availability policy": active, monitor or none.
   - The types of objects to orchestrate, such as instance configuration, virtual Ethernet, permission, security lists, and others.
   - Additional information depending on the object type.
ii. Add the orchestration to the system.
iii. Start the orchestration.
iv. Monitor, update, stop, or delete the orchestration.

### Policies

As indicated above, one can specify various policies for an orchestration. [Clouds too can specify their own policies and they can applied to an oplan.] For example, one can specify one of three high availability policies for an orchestration, which affects how it is managed by the system. High Availability is the ability to orchestrate redundant processes in case of balancing problems, failure situations, or other changes in circumstance. It allows for a flexible and fail-safe series of objects run in orchestration.

| **Policy for high availability** | **Meaning** |
|---|---|
| active | The orchestration is restarted if it stops unexpectedly. |
| monitor | The orchestration is not restarted, it is monitored. |
| none | The orchestration is neither restarted nor monitored. |

In general, at a minimum a user must have use permission on all objects he or she refers to in an orchestration; otherwise, the orchestration will not start correctly.

### Orchestratable components, user and object permissions, and object creation

Any object/functionality/feature provided by the cloud is supported. References to other orchestrations or objects are also supported. It also supports object/functionality which is dynamically added to a cloud.

These are also the valid values for the obj_type field in an orchestration in JSON format that one craft by hand; see Orchestration with Amazon EC2 and Orchestrations in JSON format described below. Also, in general, at a minimum one must have user and object permission on all objects one refer to in an orchestration; otherwise, the orchestration will not start.

Unless they were created beforehand, the network, storage, security list, or other objects referred to in an orchestration are created when the orchestration starts and destroyed when the orchestration stops. For nested orchestrations (see Nesting orchestrations), only objects at the top level (the master orchestration) are created and destroyed at start and stop.

### Status of an orchestration

The state of an orchestration changes overtime. Starting or stopping an orchestration starts or stops the object it defines; this is asynchronous so some time might be required to fully start or stop. One can watch the orchestration to see the changes.

As a non-limiting example, the possible states of an orchestration could be (this as an example and an orchestration can reflect the following status, although it is not limited to only these):

| **State** | **Description** |
|---|---|
| Starting | Orchestration is beginning. |
| Started | Orchestrated is fully started. |
| Ready | Orchestration is running. |
| Stopping | Orchestration is terminating. |
| Stopped | Orchestration is fully stopped. |

### Number of components, specifying dependencies, and nesting orchestrations

In any single orchestration, one can include many components. Moreover, an orchestration can include references to other "nested" orchestrations so there is no effective limit on the number of components. For an example of nested orchestrations, see Nesting orchestrations. One can specify the sequence in which the components in an orchestration start their dependencies on one another. For an example, see the section on Multiple objects with dependencies.

### Example of working with orchestration on the command line

This section is an example of working with a simple orchestration to add, start, monitor, and stop the instantiation of virtual machine. Full details about syntax and parameters on nimbula-api for orchestration are in the system Command-line Interface Director Command-line Interface Reference.

The orchestration in this example is shown in Basic orchestration: configuring an instance and stored in a file called lpl.json.
i. Add the orchestration to the system.
   - The name of the orchestration is specified in the JSON file itself.
   - This example uses the -f json option to display the output fully.
   - After adding, the status of the orchestration is "stopped."

   ```
 nimbula-api add orchestration lp1.json -fjson -u /acme/joeuser
 {
 "list": [
 {
   "account": "/acme/default",
   "description": "",
   "info": {},
   "name": "/acme/joeuser/lpl",
   "oplans": [
     {
        "ha_policy": "active",
        "info": {},
        "label": "launchplan1",
        "obj_type": "launchplan",
        "objects": [
          {
            "instances": [
               {
                 "imagelist": "/nimbula/public/lucid64",
                 "label": "test_instance",
                 "shape": "small",
                 "user data": {}
               }
            ]
          }
     ],
        "status": "stopped"
  }
 ],
   "relationships": [],
   "status": "stopped",
   "uri": "https://api.nimbula.example.com/orchestration/acme/joeuser/lp1"
   }
 ]
} 
```
ii. Start the orchestration. The status displayed immediately after starting might be "stopped," because starting all components of an orchestration can take time is asynchronous and can take time.

   ```
   nimbula-api start orchestration /acme/joeuser/lp1 -u /acme/joeuser -f json
   {
     "list": [
        {
          "account": "/acme/default",
          "description": "",
          "info": {},
          "name": "/acme/joeuser/lpl",
          "oplans": [
          {
               "ha_policy": "active",
               "info": {},
               "label": "launchplan1",
               "obj_type": "launchplan",
               "objects": [
         {
                   "instances": [
            {
           "imagelist": "/nimbula/public/lucid64",
                        "label": "test_instance",
                        "shape": "small",
                        "user_data": {}
                 }
               ]
         }
],
               "status": "stopped"
          "relationships": [],
          "status": "starting",
          "uri": "https://api.nimbula.example.com/orchestration/acme/joeuser/lp1"
        }
]
   }
```
iii. Watch the orchestration progress. In this example, the status has changed to "ready." Also, no errors have been reported. The orchestration is in full operation.

   ```
     {
      "list": [
        { "account": "/acme/default",
          "description": "",
          "info": {
            "errors": {}
          },
          "name": "/acme/joeuser/lpl",
          "oplans": [
          {
               "ha_policy": "active",
               "info": {
                 "errors": {}
               },
               "label": "launchplan1",
               "obj_type": "launchplan",
               "objects": [
                   {
               "instances": [
                      {
                  "imagelist": "/nimbula/public/lucid64",
                        "ip": "10.33.1.90",
                        "label": "test_instance",
                        "name": "/acme/joeuser/49dba3c0-c7b8-456a-b017-
   27267d3a2876",
                        "shape": "small",
                        "state": "running",
                        "user_data": {}
                 }
          ]
        }
   ],
               "status": "ready"
  }
 ],
          "relationships": [],
          "status": "ready",
          "uri": "https://api.nimbula.example.com/orchestration/acme/joeuser/lp1"
         }
        ]
       }
```
iv. Stop the orchestration. The status displayed immediately after stopping might be "ready," because stopping all components of an orchestration is asynchronous and takes time.

   ```
 nimbula-api stop orchestration /acme/joeuser/lp1 -f csv
 uri,name,oplans,description,account,status,info,relationships
 https://api.nimbula.example.com/orchestration/acme/joeuser/lp1,/acme/joeuser/lp1 ,"{""status"":
 ""ready"", ʺʺinfoʺʺ: {ʺʺerrorsʺʺ: {}}, ʺʺobj_typeʺʺ: ʺʺlaunchplanʺʺ, ʺʺha_policyʺʺ: ""active"",
 ""label"": ʺʺlaunchplan1ʺʺ,
 ""objects"": [{ʺʺinstancesʺʺ: [{ʺʺnameʺʺ: ʺʺ/acme/joeuser/49dba3c0-c7b8-456a- b017-
 27267d3a2876ʺʺ, ʺʺipʺʺ: ʺʺ10.33.1.90ʺʺ, ""state"": ""running"", ʺʺuser_dataʺʺ: {}, ""shape"":
 ""small"", ""imagelist"": ʺʺ/nimbula/public/lucid64ʺʺ, ""label"":
 ʺʺtest_instanceʺʺ}]}]}",,/acme/default,stopping,"{""errors"": {}}",
```
v. Watch the orchestration again. The status is now "stopped."

   ```
nimbula-api get orchestration /acme/joeuser/lp1 -f csv
 uri,name,oplans,description,account,status,info,relationships
 https://api.nimbula.example.com/orchestration/acme/joeuser/lp1,/acme/joeuser/lp1 ,"{ʺʺstatusʺʺ:
 ""stopped"", ʺʺinfoʺʺ: {}, ʺʺobj_typeʺʺ: ""launchplan"", ʺʺha_policyʺʺ: ""active"", ""label"":
 ʺʺlaunchplan1ʺʺ, ""objects"": [{ʺʺinstancesʺʺ: [{ʺʺshapeʺʺ: ʺʺsmallʺʺ, ʺʺuser dataʺʺ: {},
 ""imagelist"": ʺʺ/nimbula/public/lucid64ʺʺ, ""label"":
 ʺʺtest_instanceʺʺ}]}]}",,/acme/default,stopped,{}
```

### Orchestration with Amazon EC2

One can orchestrate components with Amazon EC2 or any other private/public clouds just as one normally can launch instances on EC. In the instance configuration portion of the orchestration, one need to include the site and account details in one orchestration, as shown in the following example:

```
 "ha_policy": "active",
   "label": "orchestrate-ec2-instance",
   "obj_type": "launchplan",
   "objects": [
     {"instances": [
          {
            "account": "/nimbula/ec2account",
                           "site": "ec2proxy/us-east-1",
            "imagelist": "/nimbula/public/ec2image",
            "label": "ec2_instance",
            "shape": "small",
           }
   ]
  }
]
```

### Orchestration sampler

Presented here are orchestrations in JSON format for instantiating virtual machines. Specifically, this section covers basic orchestration: configuring an instance and a complete annotated instance configuration. As will be shown later under a separate heading, orchestrations in JSON format as several other orchestrations for a variety of uses.

### Basic orchestration: configuring an instance

This orchestration has a single object: a plan to instantiate a virtual machine from the default machine image stored in the image list /nimbula/public/lucid64 on a small shape. The high availability policy is set to active.

```
 {
 "name": "/acme/group1/basic_launch",
 "oplans": [
 {
   "ha_policy": "active",
   "label": "launchplan1",
   "obj_type": "launchplan",
   "objects": [
     {
        "instances": [
          {
            "imagelist": "/acme/public/lucid64",
            "label": "test_instance",
            "shape": "small"
          }
         ]
        }
       ]
      }
     ]
    }
```

It is to be noted that while this example centers around a virtual machine, it could also apply to any Computational Resources (CRs). Any higher level application services like load balancers, AutoScaling, DNS, Platform As a Service (PaaS) provided by the cloud vendor or 3^{rd} party cloud service developers

### Complete annotated CR configuration

An orchestration can describe the various instances to be launched, the relationships among them, and their networking, storage, and security characteristics. Below is an orchestration for a single instance of a primary and secondary web server that must run on different nodes and a primary and secondary database. The example is of a CR configuration on a specific cloud, but it is important to realize that orchestrations are not limited to any specific clouds. They span cloud implementations, multiple clouds, hybrid clouds, etc.

The elements of this example orchestration are detailed after the listing.

```
 {
 "description": "Orchestrate e-commerce application",
 "name": "/acme/mary/sample",
 "oplans": [
     {
   "ha_policy": "active",
   "label": "EvalGuide_servers",
   "obj_type": "launchplan",
   "objects": [
        "instances": [
         {
            "block_devices": {},
            "imagelist": "/acme/mary/webserver",
            "label": "Web server front-end to OS Commerce: web server #1",
            "networking": {
               "eth0": {
                 "dns": [
                   "www"
                 ],
                 "seclists": [
                   "/acme/mary/webserver_list"
           ]
       }
  },
            "shape": "small",
            "storage_attachments": []
          },
          { "block_devices": {},
            "imagelist": "/acme/mary/webserver",
            "label": "Web server front-end to OS Commerce: web server #2",
            "networking": {
               "eth0": {
                 "dns": [
                   "www"
                 ],
                 "seclists": [
                   "/acme/mary/webserver_list"
        ]
      }
 },
            },
            "shape": "small",
            "storage_attachments": []
            "block_devices": {},
            "imagelist": "/acme/mary/dbserver",
            "label": "Database back-end for OS Commerce",
            "networking": {
               "eth0": {
                 "dns": [
                   "db"
                 ],
                 "seclists": [
                   "/acme/mary/dbserver_list"
         ]
     }
  },
            "shape": "small",
            "storage_attachments": [
               {
                 "index": 1,
                 "volume": "/acme/mary/volume1"
               }
              ]
             }
            ]
           }
          ]
         }
        ]
       }
```

Cloud Resources (CRs) are inclusive but not limited to a) virtual machine, physical machine or a OS container, b) any Storage services provided a private or public cloud, c) any Networking services provided by private or public cloud, and d) any feature that is provided by the private or public cloud.

In configuring a Computational Resource (CR) in a Nimbula cloud, one can include Relationships and Instances. For Amazon or some other cloud these parameters will be different and orchestration can configure CRs on any cloud.

Relationships allows one to define relationships between various instances such as whether they should be launched on the same of a different node or the same or different cluster. Non-limiting examples of relationships element are: same_node, different_node, same_cluster, and different_cluster.

Each type of instance can be separately defined in the launch plan. For each instance type, the following parameters can be specified:
- Shape: A valid shape with the amount of RAM and the number of CPUs needed to run one instance.
- Version: The version number identifying which machine image to run from the image list.
- tags (optional): A list of strings which will tag the instance for the end-user's uses. Creating a human-friendly tag for an instance allows one to identify a specific instance easily during instance listing. These tags are not available from within the instance. See User-defined parameters in orchestration (instance configurations).
- networking (optional): The networking elements allow the specification of three sub-elements related to supported The system network services: vEthernet, seclists and nat described below.
Be careful when constructing the networking element as certain combinations of networking elements are not allowed together. vEthernet - vEthernets are discussed in About virtual ethernets (vEthernets). As vEthernets are not supported with security lists and NAT, the vEthernet field should either be omitted or set to the default vEthernet /nimbula/public/default if that NIC also has security lists and/or NAT specified. Setting the vethernet sub element to the empty string, "", is not acceptable.
seclists - Error: Reference source not foundAn instance can belong to up to 64 security lists. For every customer, there is a default security list, /customer/default/default. If one launches a VM without a security list tag, it is assigned to the customer's default security list. nat - Network Address Translation is described in Using distributed NAT. The system's distributed NAT service provides public IP services to instances running in the system site. A launch plan can be used to:
- Get a temporary IP from an IP pool for use by the instance during its lifetime, (ippool element)
- Attach a persistent IP to a VM by referencing a pre-created IP reservation (ipreservation element).
- storage_attachments: The volumes to attach to this instance with the following sub elements:
- (optional): volume - Name of the storage volume to which the instance is attached. To be able to attach a volume to an instance, use permission is required on the storage volume and storageattachment.add permission is needed under the instance namespace.
index - The index is used to instruct the hypervisior to attach the storage volume to an instance as a particular device. For example, specifying index = 1 results in the storage volume being exposed as either/dev/vda or /dev/sda depending on the virtio capability. Index = 2 will be /dev/[sv]db and so on.
- placement_requirements (optional): These parameters are discussed in User-defined parameters in orchestration (instance configurations). A user must have use permission on a property to be able to specify it as a placement requirement in a launch plan.
- Imagelist: The full path name of one's image list
- attributes (optional): Optional user-defined parameters that can be passed to an instance of this machine image when it is launched. See About user-defined attributes and parameters in orchestrations, images, and image lists.
- Label: A label that can be used to identify this instance in the launch plan when defining relationships between launch plan elements.
- Site: The site where one wants this instance to launch if not on the local site. For more about federation, see the system Cloud Administrator Guide.
- account: An account is a billing container associated with a customer. A customer administrator must create an account to be able to launch workloads in Amazon EC2 via the system Amazon EC2 proxy or update the default account to contain the relevant Amazon EC2 credentials. The default account can be used to launch workloads across The system sites and in this case does not need to be explicitly set. The account information is passed through to all calls to a remote site. A user needs use permission on an account that they use for federation purposes. Account information is passed through with any launch command: either the default account or an explicitly specified account is used. Whether or not an action is billable, irrespective of whether it is launched locally or on a remote The system site, will depend on how billing is set up within the site and the billing arrangements with other The system sites.

### Orchestrations in JSON format

Here is a collection of orchestrations for various purposes, presented as a sampler. For background see the section above on working with orchestrations. Specifically, this section gives examples on permissions; permanent IP reservation; multiple objects with dependencies; and nesting orchestrations. While this example is given in JSON format, the specification language is not limited to JSON. Instead, this is only an example.

### Permissions

```
 {
"description": "permissions",
 "name": "/nimbula/public/permission1",
 "oplans": [
 {
"ha_policy": "active",
   "label": "user-permissions",
   "obj_type": "permission/user",
   "objects": [
     {
        "action": "GET",
        "authorizer": "user:/root/root",
        "object": "seclist:/acme/public/",
        "subject": "group:/acme/testgroup1"
   }
  ]
 },
 {
   "ha_policy": "active",
   "label": "object-permissions",
   "obj_type": "permission/object",
   "objects": [
     {
        "action": "GET",
        "authorizer": "user:/root/root",
        "object": "seclist:/acme/public/",
     } "subject": "group:/acme/testgroup1" } ]
     }
    ]
   }
```

### Permanent IP reservation

This orchestration creates and monitors an IP reservation.

```
 {"name": "/acme/joeuser/nat1",
 "oplans": [
 {
   "ha_policy": "monitor",
   "label": "ipreservation",
   "obj_type": "ip/reservation",
   "objects": [
     {
        "parentpool": "/acme/public/pool-1",
        "permanent": "True"
        }
    ]
   }
 ]
}
```

### Multiple objects with dependencies

This orchestration defines security lists (plan "A") and security rules (plan "B") for protecting a web server instance (plan "C"). First plan A is started, then plan B, and finally the web server in plan C is instantiated.

```
 {
"name": "/acme/public/dependency1",
 "oplans": [
 {
"ha_policy": "active",
   "label": "A",
   "obj_type": "seclist",
   "objects": [
     {
        "description": "orchestration: webserver seclist",
        "name": "/acme/public/webserver"
},
{
        "description": "orchestration: dbserver seclist",
        "name": "/acme/public/dbserver"
     }
   ]
  },
{
   "ha_policy": "active",
   "label": "B",
   "obj_type": "secrule",
   "objects": [
     {
        "action": "PERMIT",
        "application": "/acme/public/mysql",
        "description": "orchestration: secrule",
        "dst_list": "seclist:/acme/public/dbserver",
        "name": "/acme/public/secrule",
        "src_list": "seclist:/acme/public/webserver"
     }
   ]
  },
 {
   "ha_policy": "active",
   "label": "C",
   "obj_type": "launchplan",
   "objects": [
        "instances": [
     {
"imagelist": "/acme/public/lucid64",
            "label": "test_instance",
            "name": "/acme/public/lucid64",
            "shape": "small",
            "user_data": {}
         }
       ]
    }
  ]
}
],
   "relationships": [
 {
   "oplan": "B",
   "to_oplan": "A",
   "type": "depends"
 },
 {
   "oplan": "A",
   "to_oplan": "C",
   "type": "depends"
  }
]
   }
```

### Nesting orchestrations

In this example orchestration, several other orchestrations are referred to by name.

```
 {
"name": "/acme/public/master1",
 "oplans": [
 {
   "ha_policy": "monitor",
   "label": "composite-orchestration",
   "obj_type": "orchestration",
   "objects": [
     {
        "name": "/acme/public/sec1"
     },
     {
        "name": "/acme/public/lp2"
     },
     {
        "name": "/acme/public/nat1"
     },
     {
        "name": "/acme/public/lp1"
       }
      ]
     }
    ]
   }
```

### Third Parties

The system not only allows users to orchestrate using their own created objects and processes, but third party created objects and processes as well. This allows for an extensible cloud where third party objects and processes are seamlessly integrated into the cloud and can show up in the API or CLI itself for complete availability. Using parameterized fields, templates can also be created for these orchestrations and shared amongst community of users. This will enable sharing of ideas amongst a community to enable multi cloud application stacks .Users can refer other orchestrations in their templates thereby enabling richer collaboration.

### Troubleshooting / Status of an orchestration

Orchestration also allows a developer to observe their entire use of the cloud at once. A master orchestration can display information about how all the interdependent orchestrations are running. If something isn't working correctly, the master orchestration can indicate so. The orchestration can also indicate if security rules have been changed. It will find faults throughout the cloud and report them. It will find faults on objects and orchestrations running on multiple clouds and report them as well.

### Cloud Level Interface (CLI)

An example of a cloud level interface for the system is shown below:

```
   {
"name": "/nimbula/public/o1",
         "oplans": [
         {
"label" : "tinyplan",
                   "obj_type": "launchplan",
                   "objects": [
                       {
                       "instances": [
                           {
"shape" : "small",
                                "imagelist": "/nimbula/public/tinycore",
                                "user_data": {},
                                "label": "test_instance"
                    }
                   ]
                   }
                   ]
            "ha_policy": "active"
          },
      {
            "label" : "other-orchestration"
            "obj_type": "orchestration",
            "objects": [ "/nimbula/public/o2"]
          }
       ]
      }
```

As can be seen, it consists of two orchestration plans: *'tinyplan,'* which is a launchplan and *'other-orchestration, '* which points to another orchestration. In this case 'adding' an orchestration is separated from 'starting' an orchestration. Since 'Start' is just changing the state of an object, the query arguments are provided as part of an update operation.

In this case, the CLI command would be nimbula-api start orchestration /nimbula/public/o1. RESTfully it will specify a query argument as part of update operation. For example, PUT http://api.<sitename>.nimbula/orchestration/nimbula/public/o1?action=START.

### Performance and Scale

Load Balancing is achieved via distributing orchestrations across different orchestration managers. This way a single orchestration can point to multiple orchestration objects and can drive a whole hierarchy (all assigned to different managers).

### CONCLUSION

As disclosed herein, features consistent with the present inventions may be implemented via computer-hardware, software and/or firmware. For example, the systems and methods disclosed herein may be embodied in various forms including, for example, a data processor, such as a computer that also includes a database, digital electronic circuitry, firmware, software, computer networks, servers, or in combinations of them. Further, while some of the disclosed implementations describe specific hardware components, systems and methods consistent with the innovations herein may be implemented with any combination of hardware, software and/or firmware. Moreover, the above-noted features and other aspects and principles of the innovations herein may be implemented in various environments. Such environments and related applications may be specially constructed for performing the various routines, processes and/or operations according to the invention or they may include a general-purpose computer or computing platform selectively activated or reconfigured by code to provide the necessary functionality. The processes disclosed herein are not inherently related to any particular computer, network, architecture, environment, or other apparatus, and may be implemented by a suitable combination of hardware, software, and/or firmware. For example, various general-purpose machines may be used with programs written in accordance with teachings of the invention, or it may be more convenient to construct a specialized apparatus or system to perform the required methods and techniques.

Aspects of the method and system described herein, such as the logic, may be implemented as functionality programmed into any of a variety of circuitry, including programmable logic devices ("PLDs"), such as field programmable gate arrays ("FPGAs"), programmable array logic ("PAL") devices, electrically programmable logic and memory devices and standard cell-based devices, as well as application specific integrated circuits. Some other possibilities for implementing aspects include: memory devices, microcontrollers with memory (such as EEPROM), embedded microprocessors, firmware, software, etc. Furthermore, aspects may be embodied in microprocessors having software-based circuit emulation, discrete logic (sequential and combinatorial), custom devices, fuzzy (neural) logic, quantum devices, and hybrids of any of the above device types. The underlying device technologies may be provided in a variety of component types, e.g., metal-oxide semiconductor field-effect transistor ("MOSFET") technologies like complementary metal-oxide semiconductor ("CMOS"), bipolar technologies like emitter-coupled logic ("ECL"), polymer technologies (e.g., silicon-conjugated polymer and metalconjugated polymer-metal structures), mixed analog and digital, and so on.

It should also be noted that the various logic and/or functions disclosed herein may be enabled using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof. Examples of transfers of such formatted data and/or instructions by carrier waves include, but are not limited to, transfers (uploads, downloads, e-mail, etc.) over the Internet and/or other computer networks via one or more data transfer protocols (e.g., HTTP, FTP, SMTP, and so on).

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list and any combination of the items in the list.

## Claims

1. A method of managing computer cloud resources, comprising:
receiving, via at least one server acting as an orchestration site (512), at least one cloud resource management plan from at least one user, the cloud resource management plan comprising instructions for configuring a master orchestration to manage at least one sub orchestration, each orchestration comprising a plurality of orchestration plans and definitions of relationships between the orchestration plans, each orchestration plan comprising a group of objects, one or more policies, and a label, and wherein the at least one sub orchestration is an object of the master orchestration;
storing, via the at least one server, the at least one cloud resource management plan in at least one storage (516); retrieving, via the at least one server acting as an orchestration manager (524), the at least one cloud resource management plan from at the at least one storage; and
executing the cloud resource management plan, via the at least one server, with at least one site controller.

2. The method of claim 1, wherein the orchestration site and the orchestration manager are further configured to communicate over a distributed messaging bus.

3. The method of claim 2, wherein the communication includes information regarding whether the at least one plan is ready for execution.

4. The method of any of the preceding claims, wherein the at least one plan includes at least one group of cloud resources.

5. The method of claim 4, wherein the at least one group includes at least one cloud resource and a policy regarding the at least one resource.

6. The method of claim 5, wherein the plan includes information regarding the interaction of the at least one group with other groups.

7. The method of any of the preceding claims, wherein the plan includes a name of the plan.

8. The method of any of the preceding claims, wherein the at least one site controller includes a cloud resource.

9. The method of any of the preceding claims, wherein the storage is at least one of a database and cloud storage.

10. The method of any of the preceding claims, wherein the cloud resource is at least one of, a virtual machine, a physical machine, an operating system, storage service, networking service, and an application service.

11. A system of managing computer cloud resources, comprising at least one storage (516) and at least one server, wherein the system is configured to perform the method of managing computer cloud resources of any one of claims 1 to 10.

12. The system of claim 11, wherein a cloud resource includes at least one of a third party provided object and third party provided cloud service.

## Patentansprüche

1. Verfahren zur Verwaltung von Computer-Cloud-Ressourcen, das Folgendes umfasst:
Empfangen mindestens eines Cloud-Ressourcenverwaltungsplans von mindestens einem Benutzer über mindestens einen Server, der als Orchestrierungsort (512) fungiert, wobei der Cloud-Ressourcenverwaltungsplan Anweisungen zum Konfigurieren einer Master-Orchestrierung zum Verwalten mindestens einer Sub-Orchestrierung umfasst, wobei jede Orchestrierung eine Vielzahl von Orchestrierungsplänen und Definitionen von Beziehungen zwischen den Orchestrierungsplänen umfasst, wobei jeder Orchestrierungsplan eine Gruppe von Objekten, eine oder mehrere Richtlinien und ein Label umfasst, und wobei die mindestens eine Sub-Orchestrierung ein Objekt der Master-Orchestrierung ist;
Speichern, über den mindestens einen Server, des mindestens einen Cloud-Ressourcenverwaltungsplans in mindestens einem Speicher (516); Abrufen des mindestens einen Cloud-Ressourcenverwaltungsplans aus dem mindestens einen Speicher über den mindestens einen Server, der als Orchestrierungsmanager (524) fungiert; und
Ausführen des Cloud-Ressourcenverwaltungsplans über den mindestens einen Server mit mindestens einer Standort-Steuerung.

2. Verfahren nach Anspruch 1, wobei der Orchestrierungsort und der Orchestrierungsmanager ferner dafür konfiguriert sind, über einen verteilten Nachrichtenbus zu kommunizieren.

3. Verfahren nach Anspruch 2, wobei die Kommunikation Informationen darüber enthält, ob der mindestens eine Plan zur Ausführung bereit ist.

4. Verfahren nach einem der vorhergehenden Ansprüche, wobei der mindestens eine Plan mindestens eine Gruppe von Cloud-Ressourcen umfasst.

5. Verfahren nach Anspruch 4, wobei die mindestens eine Gruppe mindestens eine Cloud-Ressource und eine Richtlinie bezüglich der mindestens einen Ressource umfasst.

6. Verfahren nach Anspruch 5, wobei der Plan Informationen über die Interaktion der mindestens einen Gruppe mit anderen Gruppen umfasst.

7. Verfahren nach einem der vorhergehenden Ansprüche, wobei der Plan einen Namen des Plans umfasst.

8. Verfahren nach einem der vorhergehenden Ansprüche, wobei die mindestens eine Standortsteuerung eine Cloud-Ressource umfasst.

9. Verfahren nach einem der vorhergehenden Ansprüche, wobei der Speicher mindestens eines von einer Datenbank und einem Cloud-Speicher ist.

10. Verfahren nach einem der vorhergehenden Ansprüche, wobei die Cloud-Ressource mindestens eines der Folgenden ist: eine virtuelle Maschine, eine physische Maschine, ein Betriebssystem, ein Speicherdienst, ein Netzwerkdienst und ein Anwendungsdienst.

11. System zur Verwaltung von Computer-Cloud-Ressourcen, das mindestens einen Speicher (516) und mindestens einen Server umfasst, wobei das System dafür konfiguriert ist, das Verfahren zur Verwaltung von Computer-Cloud-Ressourcen nach einem der Ansprüche 1 bis 10 durchzuführen.

12. System nach Anspruch 11, wobei eine Cloud-Ressource mindestens ein von einem Dritten bereitgestelltes Objekt oder einen von einem Dritten bereitgestellten Cloud-Dienst umfasst.

## Revendications

1. Procédé de gestion de ressources en nuage informatique, comportant les étapes consistant à :
recevoir, par le biais d'au moins un serveur assurant la fonction de site d'orchestration (512), au moins un plan de gestion de ressources en nuage en provenance d'au moins un utilisateur, le plan de gestion de ressources en nuage comportant des instructions servant à configurer une orchestration maître à des fins de gestion d'au moins une sous-orchestration, chaque orchestration comportant une pluralité de plans d'orchestration et des définitions de relations entre les plans d'orchestration, chaque plan d'orchestration comportant un groupe d'objets, une ou plusieurs politiques, et une étiquette, et dans lequel ladite au moins une sous-orchestration est un objet de l'orchestration maître ;
stocker, par le biais dudit au moins un serveur, ledit au moins un plan de gestion de ressources en nuage dans au moins une mémoire de stockage (516) ; récupérer, par le biais dudit au moins un serveur assurant la fonction de gestionnaire d'orchestration (524), ledit au moins un plan de gestion de ressources en nuage en provenance de ladite au moins une mémoire de stockage ; et
exécuter le plan de gestion de ressources en nuage, par le biais dudit au moins un serveur, au moyen d'au moins un contrôleur de site.

2. Procédé selon la revendication 1, dans lequel le site d'orchestration et le gestionnaire d'orchestration sont par ailleurs configurés à des fins de communication sur un bus de messagerie réparti.

3. Procédé selon la revendication 2, dans lequel la communication comprend des informations concernant le fait de savoir si ledit au moins un plan est prêt à des fins d'exécution.

4. Procédé selon l'une quelconque des revendications précédentes, dans lequel ledit au moins un plan comprend au moins un groupe de ressources en nuage.

5. Procédé selon la revendication 4, dans lequel ledit au moins un groupe comprend au moins une ressource en nuage et une politique concernant ladite au moins une ressource.

6. Procédé selon la revendication 5, dans lequel le plan comprend des informations concernant l'interaction dudit au moins un groupe avec d'autres groupes.

7. Procédé selon l'une quelconque des revendications précédentes, dans lequel le plan comprend un nom du plan.

8. Procédé selon l'une quelconque des revendications précédentes, dans lequel ledit au moins un contrôleur de site comprend une ressource en nuage.

9. Procédé selon l'une quelconque des revendications précédentes, dans lequel la mémoire de stockage est au moins l'une parmi une base de données et une mémoire de stockage en nuage.

10. Procédé selon l'une quelconque des revendications précédentes, dans lequel la ressource en nuage est au moins l'un parmi une machine virtuelle, une machine physique, un système d'exploitation, un service de stockage, un service de réseautage, et un service d'applications.

11. Système de gestion de ressources en nuage informatique, comportant au moins une mémoire de stockage (516) et au moins un serveur, dans lequel le système est configuré pour effectuer le procédé de gestion de ressources en nuage informatique selon l'une quelconque des revendications 1 à 10.

12. Système selon la revendication 11, dans lequel une ressource en nuage comprend au moins l'un parmi un objet fourni par un tiers et un service en nuage fourni par un tiers.
